# EUROPEAN PATENT APPLICATION

(11) **EP 1 511 280 A2**
(43) Date of publication of application: **02.03.2005**
(21) Application number: 04020092.5
(22) Date of filing: 24.08.2004
(51) Int. Cl.: H04M 1/725, H04N 7/14

(54) **Mobile terminal and moving picture recording/reproducing system**

(30) Priority: 27.08.2003 JP 2003303148
(71) Applicant: NEC CORPORATION, Tokyo (JP)
(72) Inventor: Nakamura, Naoyuki, Minato-ku Tokyo (JP)
(74) Representative: Glawe. Delfs. Moll

(57) **Abstract**

A mobile phone is connected to a television receiver and receives a television program. The received television program is sequentially compressed based on the scheme of MPEG4, sent to a server through a base station and a network, and stored in the server. A user of the mobile phone can reproduce the stored television program on a display section by sending a signal to the server to make the server send the stored television program. The mobile phone may have a camera. Moving picture data taken by the camera can be similarly stored in the server and reproduced on the display section of the mobile phone. A computer can access the moving picture data through the network.

## Description

### BACKGROUND OF THE INVENTION

### 1. Field of the Invention

The present invention relates to a mobile terminal and a moving picture recording/reproducing system and, more particularly, to a system in which a mobile terminal stores moving picture data in a server, and reproduces the storedmoving picture on a display section of the terminal by accessing the server.

### 2. Description of the Related Art

In recent years, mobile phones with a camera have rapidly become widespread. Mobile phones equipped with a display having effective sensor resolution of over one million pixels are on the market. Still and moving pictures taken by the camera are normally stored in a storage.device in the mobile phone. However, a large-capacity storage device is required especially to store a long-time moving picture or a high-quality still picture. Nonetheless, it is very difficult to arrange a large-capacity storage device in a mobile phone because large-capacity storage devices are large in size. Therefore, currently, it is impossible to store moving picture information taking a certain length of time or more in a mobile phone.

Further, in recent years, mobile phones equipped with a television tuner also have been released. However, although a user of this type of mobile phone can view a television program, the user cannot record a television program for the above-mentioned reason.

On the other hand, the Japanese Unexamined Patent Publication No. 2002-77839 discloses a technology by which a mobile phone controls a recording server through a network to allow the server to record and store a digital broadcast program. A user of this type of mobile phone can view a recorded program at desired time by accessing the recording server. In this case, however, the recording server needs a large number of television tuners. If the number of television tuners to be installed in the server is small, it may occur that a user cannot record or cannot make a recording reservation for a desired program.

### SUMMARY OF THE INVENTION

According to the present invention, a mobile terminal exchanging data with a server is provided. This mobile terminal includes: a display section; converting means for converting moving picture data into a digital signal; signal processing means for compressing and decompressing the digital signal; and a sending/receiving section for sending and receiving the compressed digital signal.

Further, according to the present invention, a moving picture recording/reproducing system using a mobile terminal is provided. This system includes: a mobile terminal which sends and receives moving picture data; and a server which stores moving picture data received from the mobile terminal and which sends the moving picture data to the mobile terminal in response to a request of the mobile terminal.

The above-described present invention enables the mobile terminal, which cannot incorporate a large-capacity storage device, to record a television program or a moving picture taken by a camera, and to reproduce the program or moving picture at desired time.

### BRIEF DESCRIPTION OF THE DRAWINGS

The above and other objects, features and advantages of the present invention will become apparent from the following detailed description when taken with the accompanying drawings' in which:
FIG. 1 is a block diagram showing an embodiment of a mobile terminal and a moving picture recording/reproducing system;
FIG. 2 shows an example of recording operation in the moving picture recording/reproducing system; and
FIG. 3 shows an example of reproducing operation in the moving picture recording/reproducing system.

### DETAILED DESCRIPTION OF THE PREFERRED EMBODIMENT

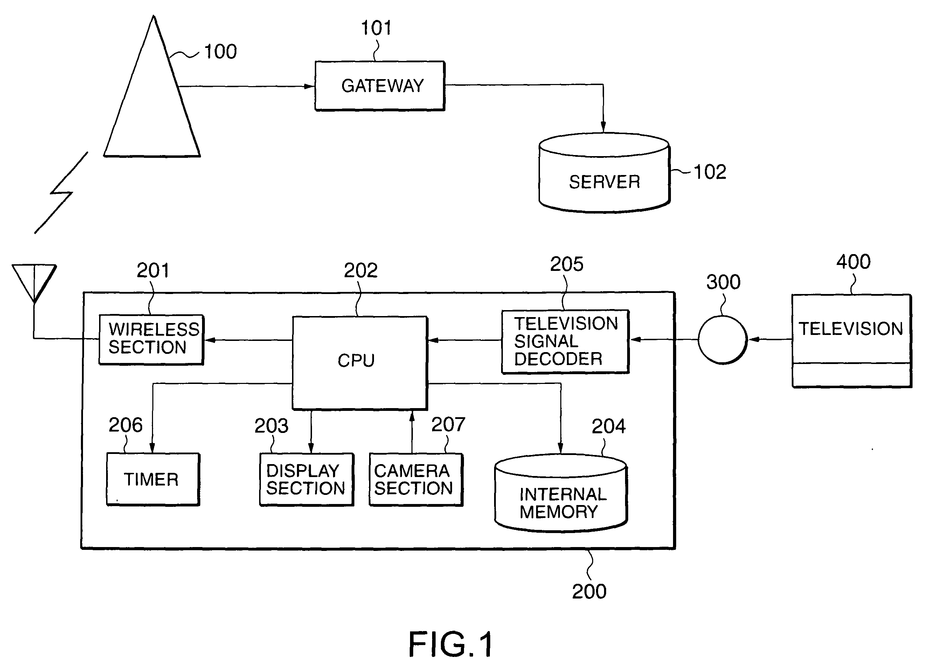

Hereinafter, a preferred embodiment of the present invention will be described. FIG. 1 shows an embodiment of a mobile terminal and a moving picture recording/reproducing system. The system according to this embodiment includes a base station 100, a gateway 101, a server 102, and a mobile phone 200. Normally, there is a network between the base station 100 and the server 102. When the mobile phone 200 records a television program, the mobile' phone 200 receives analog television signals, which are moving picture data, from a television receiver 400 through a connector 300. The mobile phone 200 converts the analog television signals into digital signals and sends the digital signals to the server 102 through the base station 100 and the gateway 101. The server 102 stores the digitized television signals (i.e. a television program). Moreover, the mobile phone 200 sends a control signal to the server 102 to allow the stored television program to be sent and displayed on a display section 203 of the mobile phone 200.

The mobile phone 200 according to this embodiment includes a wireless section 201, a CPU 202, the display section 203, an internal memory 204, a television signal decoder 205, a timer 206, and a camera section 207. The mobile phone 200 receives analog television signals based on NTSC (National Television Standards Committee), PAL (Phase Alternation by Line) or the like, from the television receiver 400 through the connector 300. The television signal decoder 205 converts these analog television signals into digital signals. The CPU 202 compresses (or decompresses) the converted digital signals, based on the scheme of MPEG4 (Moving Picture Experts Group phase 4). The compressed television signals (i.e. a television program) are sent from the wireless section 201 to the base station 100, and then stored in the server 102 after passing the gateway 101. A user makes a given input to the mobile terminal 200, thereby sending a reproduction request signal to the server 102. When the server 102 receives the reproduction request signal, the server 102 sends television signals (i.e. a television program) responding to the request of the user to the mobile phone 200. The CPU 202 decompresses the compressed analog television signals sent from the server 102, and displays moving pictures corresponding to the signals on the display section 203. The CPU 202 can receive television signals and send the signals to the server 102 at predetermined time by controlling the timer 206. The CPU 202 can store a still picture and a short-time moving picture in the internal memory 204.

The mobile phone 200 has the camera section 207. The camera section 207 takes a still picture or a moving picture. When the camera section 207 takes a moving picture taking a long time, the CPU 202 can send the taken moving picture to the server 102 in real time and store the picture in the server 102. The signal processing in this case is performed in the same manner as the above-described operation. A user can view the taken moving picture at desired time by allowing the moving picture to be displayed on the display section 203 of the mobile phone 200. Moreover, the user can download the moving picture to a home computer by accessing the server 102 from the computer. When a user accesses a moving picture or still picture stored, the server 102 can require an input of a predetermined ID number. It is possible that the server 102 is configured to allow anyone to access stored television programs. In this case, the server 102 makes the menu of the stored television programs public.

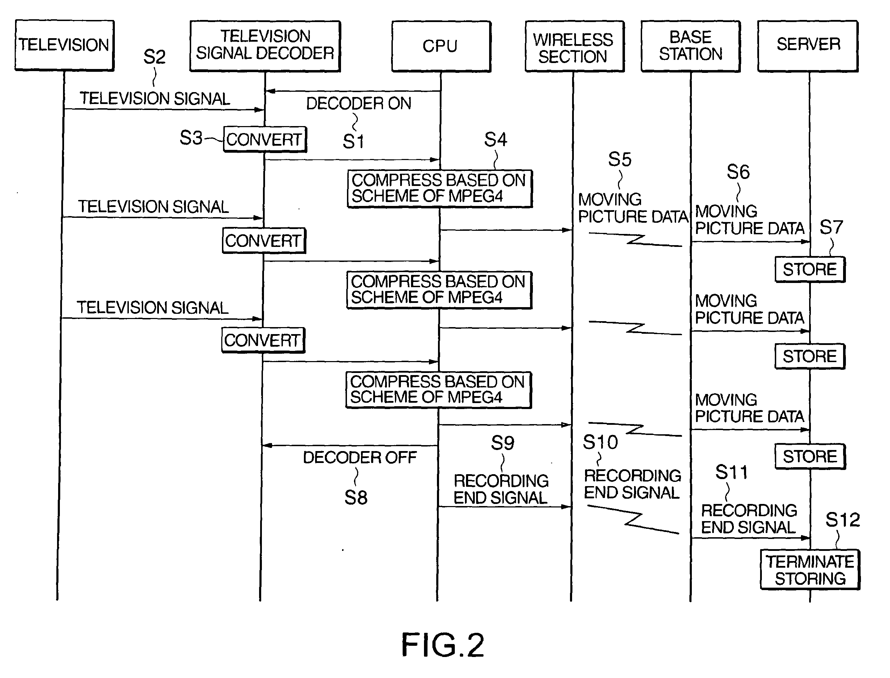

Referring to FIG. 2, an example of television program recording operation by the mobile phone 200 is shown. According to a manipulation by a user, the CPU 202 turns on the television signal decoder 205 (S1). The television signal decoder 205 receives analog television signals (i.e. a television program) from the television receiver 400 through the connector 300 (S2) , and converts the analog television signal into digital moving picture data (S3) . The CPU 202 compresses the moving picture data, based on the scheme of MPEG4 (S4), and sends the compressed data to the wireless section 201. The wireless section 201 sends the moving picture data and a storage request signal to the base station 100 (S5) . The base station 100 sends the moving picture data and the storage request signal to the server'102 (S6) . The server 102 stores the received digital moving picture data (S7) . Received television programs are sequentially sent to the server 102 and stored therein. A series of these operations is continued until the recording operation is completed. When the CPU 202 detects a recording end signal, the CPU.202 turns off the television signal decoder 205 (S8) , and sends the recording end signal to the base station 100 through the wireless section 201 (S9, S10). The base station 100 sends a recording end signal to the server 102 (S11) . The server 102 then terminates storing the moving picture data (S12).

Moving picture data taken by the camera section 207 of the mobile phone 200 is directly inputted to the CPU 202. The CPU 202 compresses the moving picture data, based on the scheme of MPEG4 and sends the compressed data to the wireless section 201.

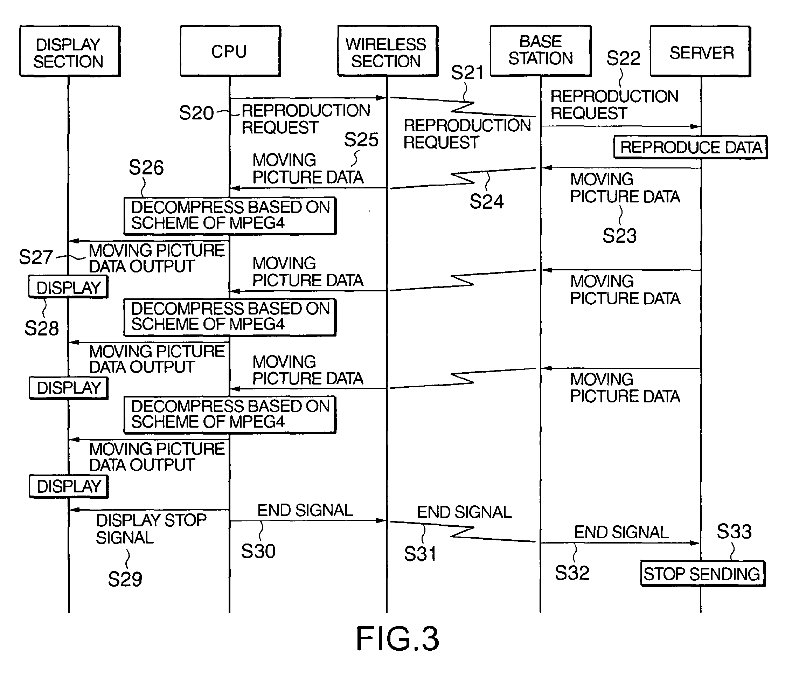

Referring to FIG. 3, an example of television program reproducing operation by the mobile phone 200 is shown. According to a manipulation by a user, the CPU 202 sends a moving picture reproduction request signal to the base station 100 through the wireless section 201 (S20, S21) . The base station 100 sends the moving picture reproduction request signal to the server 102 (S22). The server 102 sends stored moving picture data (i.e. a television program or a moving picture taken by the camera section 207) to the mobile phone 200 through the base station 100 (S23, S24). The CPU 202 acquires the moving picture data from the wireless section 201 (S25) , and decompresses the data based on the scheme of MPEG4, thus forming moving picture data for reproduction (S26) . The display section 203 receives the decompressedmoving picture data fromthe CPU 202 and displays the moving picture data (S27, S28). The moving picture data are sequentially sent from the server 102, displayed and reproduced. The above-described operations are continued until a closing manipulation is performed or until the moving picture dataareallsent. When a user performs the closing manipulation, the CPU 202 sends a display stop signal to the display section 203 (S29). At the same time, the CPU 202 sends an end signal to the wireless section 201 (S30). The end signal is sent to the server 102 through the base station 100 (S31, S32). Upon receiving the end signal, the server 102 stops sending the moving picture data (S33) . In a case where the server 102 stores moving picture data taken by the camera section 207, a user can allow the moving picture data to be reproduced on the display section 203 by manipulations similar to those described above.

Note that a user can erase desired moving picture data stored in the server 102 by sending a given signal to the server 102 from the mobile terminal. In addition, for example, when a user of the mobile phone sends predetermined identification information and a given request signal to the server 102 from a home computer, the server 102 can send moving picture data to the computer through a network.

According to the mobile terminal and the moving picture recording/reproducing system stated above, it is possible for a user of the mobile terminal to record large moving picture data and to reproduce it easily at desired time.

While the present invention has been described in connection with a certain preferred embodiment, it is to be understood that the subject matter encompassed by the present invention is not limited to the specific embodiment. On the contrary, it is intended to include all alternatives, modifications, and equivalents as can be included within the spirit and scope of the following claims.

## Claims

1. A mobile terminal exchanging data with a server, comprising:
a display section;
converting means for converting moving picture data into a digital signal;
signal processing means for compressing and decompressing the digital signal; and
a sending/receiving section for sending and receiving the compressed digital signal.

2. The mobile terminal according to claim 1, wherein the moving picture data is a television signal.

3. The mobile terminal according to claim 2, wherein the mobile terminal receives the television signal from a television receiver.

4. The mobile terminal according to claim 1, further comprising a camera section,
wherein the moving picture data is inputted from the camera section.

5. The mobile terminal according to claim 1, wherein the signal processing means compresses and decompresses the digital signal, based on the scheme of MPEG4.

6. The mobile terminal according to claim 1 wherein the mobile terminal is a mobile phone.

7. The mobile terminal according to claim 1, further comprising control means for allowing recording to start at preset time.

8. The mobile terminal according to claim 1, wherein the mobile terminal exchanges data with the server through a network.

9. A moving picture recording/reproducing system using a mobile terminal, comprising:
a mobile terminal that sends and receives moving picture data; and
a server that stores moving picture data received from the mobile terminal and sends the moving picture data to the mobile terminal in response to a request of the mobile terminal.

10. The moving picture recording/reproducing system according to claim 9, wherein the mobile terminal executes the following operations:
(a) converting the moving picture data into a digital signal, compressing the digital signal and sending the compressed signal to the server; and
(b) decompressing the compressed moving picture data sent from the server and displaying the moving picture data on a display section.

11. The moving picture recording/reproducing system according to claim 9, wherein the moving picture data is a television signal.

12. The moving picture recording/reproducing system according to claim 9, wherein the moving picture data is inputted from a camera section provided on the mobile terminal.

13. The moving picture recording/reproducing system according to claim 10, wherein the mobile terminal compresses and decompresses the digital signal, based on the scheme of MPEG4.

14. The moving picture recording/reproducing system according to claim 9, wherein the mobile terminal is a mobile phone.

15. The moving picture recording/reproducing system according to claim 9, wherein the moving picture data stored in the server can be accessed by another predetermined mobile terminal.

16. The moving picture recording/reproducing system according to claim 9, wherein the moving picture data stored in the server can be downloaded to a computer.

17. The moving picture recording/reproducing system according to claim 9, wherein the moving picture data is exchanged through a network.
